(19) Europäisches Patentamt
European Patent Office
Office européen des brevets

(11) Publication number: **0 267 554 A2**

(12) **EUROPEAN PATENT APPLICATION**

(21) Application number: 87116414.1

(51) Int. Cl.⁴: C08F 220/10 , C08F 2/50

(22) Date of filing: 06.11.87

(30) Priority: 12.11.86 US 929304

(43) Date of publication of application:
18.05.88 Bulletin 88/20

(84) Designated Contracting States:
AT BE CH DE ES FR GB GR IT LI LU NL SE

(71) Applicant: S.C. JOHNSON & SON, INC.
1525 Howe Street
Racine, Wisconsin 53403(US)

(72) Inventor: Sutton, David C.
1435 Margrave Court
Racine Wisconsin 53406(US)

(74) Representative: Baillie, Iain Cameron et al
c/o Ladas & Parry Isartorplatz 5
D-8000 München 2(DE)

(54) **Aqueous polymer systems curable by cationic photo-initiation and methods of applying same to substrates.**

(57) The present invention provides a stable, aqueous dispersion of a polymer characterized by an average molecular weight of at least 50,000 and comprising the reaction product of from 10 to 90% of a monomer containing ethylenic unsaturation and pendent cationic reactive functionality, and 90 to 10% of a monomer containing ethylenic functionality, said polymer having cationic functionality sufficient to undergo self-crosslinking through said cationic reactive functionality in the presence of a cationic photo-initiator and upon exposure to actinic light to become insoluble and infusible. Said polymer is also combined with a cationic photo-initiator to provide for a polymer system crosslinking upon exposure to actinic light to provide an infusible and insoluble material incorporated in coating compositions which when applied to a substrate and dried are cured with ultraviolet light to provide durable protective coatings.

EP 0 267 554 A2

This invention relates to aqueous polymer containing compositions which are curable by irradiation with actinic light. More particularly, the invention relates to high molecular weight aqueous polymer dispersions curable by cationic photo-initiation; to aqueous polymer systems containing a cationic photo-initiator and a high molecular weight polymer having cationic reactive functionality activatable by cationic photo-initiation, and to coating compositions containing such polymer systems.

Polymer systems having a high degree of cross linking based on epoxy or polyurethane resins are known. These polymer systems are useful in floor coatings, such as floor sealers and the like compositions where high endurance of a film of the coating composition is essential. Such systems, particularly those based on high solids with little or no solvent, must be packaged as a two-component system or subjected to moisture cure. In the two-component system a catalyst or co-reactant is mixed with a resinous material such as an epoxide at time of application. These systems have extremely short pot lives and, as a result, must be quickly applied to a substrate once activated. This precludes as a practical matter recoating or the application of several coatings. Further, it is impractical to patch or fix-up a damaged or otherwise defective area. Moisture cure systems are dependent for curing upon humidity and, accordingly, cannot be utilized in dry climate. Additionally, moisture-cure systems have relatively long air cure times. Although the problems associated with short pot life or the like can be minimized by utilization in the systems of relatively large amounts of organic solvents, the release of organic solvent into the environment by evaporation from the coating as the coating dries to a film is ecologically objectable. Moreover, the films being air cured, in addition to drying time, can require substantial curing times before the coatings can be walked, on or otherwise put into use. Although aqueous polymer systems useful in floor coatings are known, these systems are primarily based on low molecular weight polymers and have only limited endurance to heavy traffic.

Ultraviolet light-curable polymer systems including aqueous systems containing both low and high molecular weight polymers and based on free radical or cationic initiation are presently known. Of the two types of photo-initiation systems, free radical is the most common due to the availability of free radical photo-initiators and to the abundance of monomers and oligomers which are available for use in making free radical initiated systems. Thus, Muzyczko et al, U.S. Patent Nos. 4,186,069, 4,224,398, and 4,273,851, assigned to Richardson Graphics Company, disclose photo-polymerizable systems comprising a high molecular weight polymer dispersed in an oil-in-water polymer emulsion along with low molecular weight, water-soluble or water-dispersible light-sensitive polymers having multiple free radical reactive groups. These systems are cured using free radical initiation to provide a cured system wherein high molecular weight polymer moieties are bonded or held together through the low molecular weight polymer moieties. Such systems are primarily utilized in the formation of resists and the like wherein a polymer system on a suitable substrate is selectively irradiated to provide an insoluble and infusible crosslinked polymer. The unexposed areas are then removed, for example, by washing in water.

McCarty, U.S. Patent No. 4,125,503, assigned to Mobil Oil Corporation, also discloses ultraviolet curable aqueous emulsion coating compositions in which the discontinuous phase of the emulsion is constituted by liquid droplets of ultra violet curable polyethylenically unsaturated materials. The liquid droplets are stabilized in the emulsion by means of a polyoxypropylene-polyoxyethylene emulsifier which serves as a co-sensitizer. The systems which utilize low or relatively low molecular weight polymers are cured by free radical initiation.

McGinniss et al, U.S. Patent No. 4,107,013, assigned to SCM Corporation, discloses an aqueous latex coating composition wherein large molecules, i.e., high molecular weight molecules, are emulsified with compatible low molecular weight polymers. The polymer systems are cured through the low molecular weight crosslinking polymers, again using free radical initiation.

Although the free radical initiated polymer systems of the prior art are useful, they cannot readily be utilized in protective coating compositions such as in floor sealers or polishes in that with free radical initiated curing it is desirable to exclude oxygen from the reaction site since oxygen will inhibit or quench free radical curing. Accordingly, it is conventional with a free radical system to carry out the initiation under a blanket of nitrogen or the like. In view of this requirement, it is normally necessary to take the coated substrate to the source of ultraviolet light rather than taking the ultraviolet source to the coated substrate. Moreover, in free radical initiated polymer systems, the curing stops as soon as the ultraviolet source is removed from the coated substrate, precluding post cure.

Dickinson et al, U.S. Patent No. 4,548,890, corresponding to the United Kingdom Patent Application No. 2,137,626 A, discloses aqueous polymer dispersions comprising as a physical mixture water, a cationically curable compound such as a low molecular weight epoxy resin, a photosensitive onium salt, a water-soluble colloid, reactive diluents, and fillers. These systems are cured through cationic photo-initiation with ultraviolet light to provide printing screens, lithographic plates, and printed circuit resists. After selective

exposure of a coating of the polymer system to actinic light to promote curing, the unexposed areas are removed by washing with water to provide the desired resists. Although the polymer systems disclosed are cationically initiated, the cationic reactive polymers utilized are of low molecular weight. Furthermore, as seen from the examples, the compositions utilize a water-soluble colloid and reactive diluents mixed with the resin containing cationic reactive functionality. The combination of the low molecular weight of the cationic curable resin and the use of the water-soluble colloid and reactive diluents leads to the formation of relatively soft films which have only limited resistance to solvents, including water. Because of the low molecular weight of the polymers, an endurable system of the type essential for use as protective floor coatings and the like is not obtainable.

No polymer systems are presently known to the present inventor which utilize a high molecular weight polymer containing as a part of the polymer cationic reactive functionality which is curable by cationically photo-initiated polymerization. Accordingly, there is a need for aqueous polymer systems which, upon curing, provide film properties which are equal to or superior to the properties of the conventionally utilized organic solvent systems based on epoxy and polyurethane resins. These desired aqueous systems must be cationically initiated so as to permit the application of the composition to a substrate such as a floor and, after the initial drying where substantially only water is released to the environment, curing is effected by exposure of the film to actinic rays, such as ultraviolet rays from an ultraviolet lamp to provide durable films.

The present invention therefore provides an aqueous dispersion of a high molecular weight polymer containing cationic reactive functionality which will self-crosslink in the presence of a cationic photo-initiator upon exposure to actinic light as well as said aqueous dispersion in combination with a compound which will generate an acid on exposure to actinic light to form a polymer system which is stable until exposure to actinic light and, when applied as a coating and upon exposure to actinic light, will cure through self-crosslinking to provide an insoluble and infusible film.

The present invention further provides an aqueous coating composition for application to a floor as a floor sealer or polish comprising a polymer system which is cationically initiated by ultraviolet light which can be applied to a floor as a coating, dried, and rapidly cured by exposure to ultraviolet irradiation. A method of coating a surface, such as a floor, with a protective finish comprising the steps of applying a coating composition containing an aqueous high molecular weight polymer containing cationic reactive functionality which is self-crosslinking in the presence of a cationic photo-initiator and upon exposure to actinic light, permitting the coating to dry to a film, and curing the film by sweeping the surface of the film with ultraviolet light is also provided.

Specifically, the present invention provides a stable, aqueous dispersion of a polymer characterized by an average molecular weight of at least 50,000 and comprising the reaction product of from 10 to 90% of a monomer containing ethylenic unsaturation and pendent cationic reactive functionality, and 90 to 10% of a monomer containing ethylenic functionality, said polymer having cationic functionality sufficient to undergo self-crosslinking through said cationic reactive functionality in the presence of a cationic photo-initiator and upon exposure to actinic light to become insoluble and infusible. Preferably, the dispersion possesses an average molecular weight of above about 150,000. The polymer can be formulated containing cationic reactive functionality which when in the presence of a cationic photo-initiator will rapidly crosslink when exposed to actinic light, such as ultraviolet light, to provide an insoluble and infusible film. The aqueous dispersion of polymers can be utilized in a polymer system containing the high molecular weight polymer, a cationic photo-initiator, and depending on the end use of the polymer system suitable surfactants, plasticizers, co-solvents, coalescing agents, and additional film-forming components such as waxes and the like. Surprisingly, when the polymer system is applied to a substrate such as a floor and swept rapidly with a source of actinic light, the curing of the film will immediately commence and, after the removal of the source of actinic light from the substrate, curing will continue until complete cure is accomplished. Initial curing is accomplished within seconds, and complete curing is normally completed within about twenty-four hours. This permits the formulation of film-forming systems which can be applied to relatively large surface areas such as a floor; and, after initial sweeping with a source of actinic light, the polymer will cure without need for continued application of ultraviolet light. It is not necessary to take precautions so as to preclude contact of the film surfaces with oxygen which will quench the free radical actinic light cure of films.

The high molecular weight polymers of the present invention are co-polymers of (a) monomers containing ethylenic unsaturation and cationic reactive functionality; and (b) mon omers having ethylenic unsaturation. The mixture of monomers are subjected to polymerization, preferably using dispersion or emulsion polymerization techniques, to provide through addition polymerization of the ethylenic unsaturation of the monomers, a polymer having a weight average molecular weight in excess of about 50,000, and preferably above about 150,000. Surprisingly, the addition polymerization will proceed in an aqueous medium without reaction of or loss of the cationic reactive functionality to provide an aqueous polymer

dispersion having a high density of sites reactive with cationic groups. The cationic reactive groups or sites of the aqueous system when in the presence of cationic photo-initiation catalysts and upon exposure to actinic light such as ultraviolet light will self-cure to provide an insoluble and infusible film.

The monomers containing ethylenic unsaturation and cationic reactive functionality preferably are monomers containing epoxide functionality and ethylenic functionality such as glycidyl acrylates (GA) or glycidyl methacrylates (GMA) which have the formula -

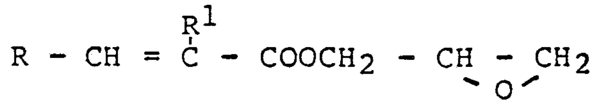

wherein R and $R^1$ are each hydrogen or the methyl radical. These monomers while being highly reactive through the unsa turated linkage do not undergo polymerization through the epoxy group, providing a high molecular weight polymer having reactive epoxy functionality. Although the glycidyl acrylates or methacrylates are the preferred monomers, it is possible to utilize according to the present invention monomers containing in addition to the ethylenic unsaturation, cationic reactive functionality derived from the cyclic ketals, vinyl ethers, cyclic ethers, and the lactones. The reactive moiety of monomers suitable for use in accordance with the present invention include -

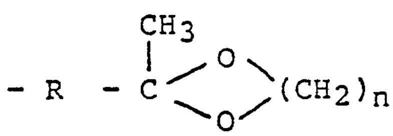 wherein n is 2, 3, and 4, and R is alkyl

cyclic ketals

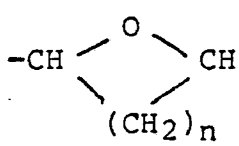 wherein n is 0, 1, 2, 3, and 4

cyclic ethers

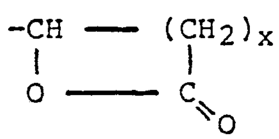 wherein x is 2, 3, 4, and 5

lactones

$-R-CH_2-O-CH=CH_2$ wherein R is alkyl vinyl ethers

The co-monomers utilized with the monomer containing cationic reactive functionality are the monomers containing the moiety $CH_2=C<$ as commonly utilized in the preparation of addition polymers. The co-monomer preferably is a monomer derived from acrylic acid such as the esters of acrylic acid including butylacrylate (BA), butyl methacrylate (BMA), methyl acrylate (MA), methyl methacrylate (MMA), ethyl acrylate (EA), and ethyl methacrylate (EMA) monomers containing only functional groups which will not react with or upon the cationic reactive functional groups. The preferred monomers include the acrylate

esters which do not contain reactive carboxyl or hydroxyl functionality such as the (meth)acrylate esters such as methyl methacrylate, ethyl (meth)acrylate, n-propyl (meth)acrylate, n-butyl (meth)acrylate, isopropyl (meth)acrylate, isobutyl (meth)acrylate, n-amyl (meth)acrylate, n-hexyl (meth)acrylate, isoamyl (meth)-acrylate, trifluoroethyl (meth)acrylate, benzyl (meth)acrylate, 2-n-butoxyethyl (meth)acrylate, 2-chloroethyl (meth)acrylate, sec-butyl-(meth)-acrylate, tert-butyl (meth)acrylate, 2-ethylbutyl (meth)acrylate, cinnamyl (meth)acrylate, cyclohexyl (meth)acrylate, cyclopentyl (meth)acrylate, 2-ethoxyethyl (meth)acrylate, furfuryl (meth)acrylate, hexafluoroisopropyl (meth)acrylate, 3-methoxybutyl (meth)acrylate, 2-methoxybutyl (meth)-acrylate, 2-nitro-2-methylpropyl (meth)acrylate, n-octyl-(meth)acrylate, 2-ethylhexyl (meth)acrylate, 2-phenoxyethyl (meth)acrylate, 2-phenylethyl (meth)acrylate, phenyl (meth)acrylate, tetrahydrofurfuryl (meth)-acrylate, and tetrahydropyranyl (meth)acrylate. As used herein, "meth" in parentheses before acrylic or acrylate is used to designate either the methacrylic or acrylic compound. Other non-reactive modifiers which can be used include ethylenic monomers such as vinyl acetate, methyl crotonate, and the like. The co-monomer can be utilized in amounts of from 10% to 90%.

The co-monomer can also include aromatic content derived from -C = C-containing aromatic compounds such as styrene, alpha-methylstyrene, vinyl toluene, p-methylstyrene, tertiary-butylstyrene, and the like.

The co-monomer can also include hydroxyl functionality derived from an ethylenically unsaturated monomer containing a hydroxyl group which can be reactive with the cationic reactive functionality of the first co-monomer. Suitable monomers include 2-hydroxyethyl acrylate, 3-chloro 2-hydroxypropyl acrylate, 2-hydroxy-butyl acrylate, 6-hydroxyhexyl acrylate, 2-hydroxymethyl methacrylate, 2-hydroxypropyl methacrylate, 6-hydroxyhexyl methacrylate, 5,6-dihydroxyhexyl methacrylate, and the like.

Erickson, U.S. Patent No. 2,580,901, discloses copolymers of glycidyl acrylate and glycidyl methacrylate with one or more monomers having the $CH_2 = C <$ grouping. The patent does not disclose the amount of free epoxide groups on the polymer and does not suggest that the polymer will have reactive functionality sufficient to cause self-crosslinking upon exposure to actinic light in the presence of a cationic photoinitiator.

The Cationic Photo-initiators Of The Invention

The catalysts or cationic photo-initiators which are used according to the invention are compounds which will ultimately generate an acid, such as a Lewis acid or a Bronsted acid, on exposure to actinic light. These materials include, therefore, the photosensitive aryldiazonium salts which on exposure to ultraviolet light release a Lewis acid and the iodonium or sulphonium salts having a metal or metalloid halide anions which on exposure to ultraviolet light will generate a Bronsted acid. Moreover, the photo-initiator must be water dispersible or soluble in water.

The preferred onium salt photo-initiators are iodonium and sulphonium salts. The iodonium salts can have the formula -

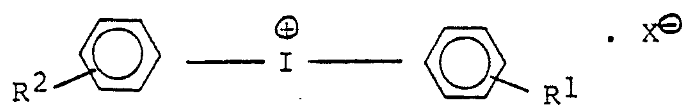

wherein each of $R_1$ and $R_2$ is selected from hydrogen, halogen, straight or branched alkyl, alkoxy, aryl, acyl, nitro, or cyano, and $X^-$ is tetrafluoroborate, hexafluorophosphate, hexafluoroarsenate, or hexfluoroantimonate.

The sulfphonium salts may be of the formula -

$$(R^3)_a(R^4)_b(R^5)_c \overset{\oplus}{S} . X^{\ominus}$$

wherein $X^-$ is as defined above, $R^3$ is a monovalent aromatic radical which may be substituted by one or more alkyl (including substituted alkyl), aryl, alkoxy, hydroxy, phenoxy, thiophenoxy, mercaptan or acyl groups or halogen atoms; $R^4$ is an organic aliphatic radical selected from alkyl, cycloalkyl and substituted alkyl; $R^5$ is a polyvalent organic radical forming a heterocyclic or fused ring structure with $S^+$, a is a whole number from 0 to 3 inclusive, b is a whole number from 0 to 2 inclusive, and c is 0 or 1, and a + b + c = 3.

Such photo-initiators are used in the polymer systems in a proportion of 1% to 10%, and preferably 1%

to 5%, by weight. Preferred photo-initiators of the aforesaid formulae are 4,4'-dimethyldiphenyliodonium hexafluorophosphate, diphenyliodonium hexafluorophosphate, triphenylsulphonium hexafluorophosphate, and 4-thiophenoxyphenyl-diphenylsulphonium hexafluorophosphate. The General Electric Company markets a commercial cationic photo-initiator UVE-1016 which is a triarylsulphonium hexaflurophosphate and UVE-1014 which is a triarylsulphonium hexafluoroantimonate, each containing 50% active ingredient in propylene carbonate which is dispersible in water and on exposure to ultraviolet light produces a protonic acid. Suitable cationic photo-initiators of the above type are described in Keane et al, U.S. Patent No. 4,429,034, assigned to the General Electric Company.

## Formulations Of Invention

The aqueous high molecular weight polymer systems containing the high molecular weight polymers having cationic reactive functionality of the present invention are formulated with cationic photo-initiators preferably by using a surfactant, such as a fluorosurfactant, to provide compatibility and good wetting and leveling characteristics. Moreover, the formulations can include, depending upon the end use, other ingredients including plasiticizers, inert polymeric or inorganic fillers, biocides, defoamers, reactive diluents as coalescing agents, and the like. Where the polymer system is to be utilized as a floor coating such as a sealer, it can be desirable to include additional film formers such as waxes.

The aqueous, light-sensitive polymer systems of the present invention can be cured with actinic light having a wavelength of from about 200 to about 1500 namometers (nm). The preferred actinic light is ultraviolet light primarily in view of the number of types of ultraviolet lamps commercially available. These lamps include low pressure mercury lamps, medium pressure mercury lamps, and high pressure mercury lamps, each being distinctive in the intensity of and in its spectral wave distribution. As the names imply, mercury vapor is at different pressures in each lamp. Low pressure mercury lamps have only a slight vacuum, i.e., 10 to 3 torr; medium pressure mercury lamps have a pressure of about 1 to 2 atmospheres, and high pressure mercury lamps are under several hundred atmospheres of pressure. The intensity of low pressure mercury lamps for the major portion of its emissions is at about 200 to 254 nm. Medium pressure mercury lamps have a broader spectral distribution, with the major portion of the emissions being in the range of 200 to 1400 nm. The high pressure mercury lamp is the most intense in its spectral output and is normally not used in conventional coating applica tions. However, any of these lamps can be utilized to initiate the polymer systems of the present invention.

## PRESENTLY PREFERRED EMBODIMENTS

Having described the invention in general terms, the following presently preferred embodiments are being set forth to further illustrate the invention.

## Polymer Preparation

Polymer numbers 1 through 23 were prepared from the components of Table 1 using the following general procedure. A one liter 4-necked, fluted flask equipped with an overhead paddle stirrer, heating mantle, thermometer, nitrogen inlet, reflux condenser, and pressure equalizing addition funnel, was charged with the designated surfactant, 2.00 g 1% aqueous ammonia, 5.0 g 0.01 M $CuSO_4$ (4 ppm total Cu based on total volume), and with deionized water to make up the designated volume. $N_2$ is passed through the flask while the flask is preheated with stirring to 90°C. 8.23 g hydrogen peroxide (30% active) (1% based upon monomers) was next added. A solution containing the designated monomers was added over a period of 1 hour. After the addition was completed, the mixture was heated for an additional half hour at 90°C. The reaction flask was then force cooled in an ice bath to room temperature. In Examples 1-10 no chain transfer agent was used; whereas in Examples 11-23 0.5%, based upon monomer content, butyl mercaptopropionate was used. The polymer emulsion obtained in each of the examples had a blue/white appearance with a trace of throw-out. The polymer was filtered through cheesecloth. Table 1 is as follows:

TABLE 1

| Polymer No. | GMA % | BA % | MMA % | HEMA % | EA % | STY % | Surfactant Anionic % | Surfactant Nonionic % | Theoretical Tg |
|---|---|---|---|---|---|---|---|---|---|
| 1 | 80 | 20 | - | - | - | - | 0.5 | 2.0 | 20 |
| 2 | 30 | 30 | 40 | - | - | - | 0.5 | 2.0 | 24 |
| 3 | 10 | - | 37.57 | - | 52.43 | - | 0.5 | 2.0 | 20 |
| 4 | 20 | - | 31.14 | - | 48.86 | - | 0.5 | 2.0 | 20 |
| 5 | 30 | - | 24.71 | - | 45.29 | - | 0.5 | 2.0 | 20 |
| 6 | 40 | - | 18.28 | - | 41.72 | - | 0.5 | 2.0 | 20 |
| 7 | 80 | 20 | - | - | - | - | 0.5 | 2.0 | 20 |
| 8 | 80 | 20 | - | - | - | - | 0.5 | 1.5 | 20 |
| 9 | 40 | 20 | - | - | - | 40 | 0.5 | 4.0 | 35 |
| 10 | 40 | 20 | 30 | - | - | 10 | 0.5 | 4.0 | 37 |
| 11 | 20 | 34.9 | 45.10 | - | - | - | 0.5 | 4.0 | 20 |
| 12 | 40 | 29.8 | 30.20 | - | - | - | 0.5 | 4.0 | 20 |
| 13 | 60 | 24.7 | 15.6 | - | - | - | 0.5 | 4.0 | 20 |
| 14 | 20 | 22.8 | 57.2 | - | - | - | 0.5 | 4.0 | 40 |
| 15 | 40 | 17.8 | 42.2 | - | - | - | 0.5 | 4.0 | 40 |
| 16 | 60 | 12.9 | 27.1 | - | - | - | 0.5 | 4.0 | 40 |
| 17 | 40 | 8.4 | 51.6 | - | - | - | 0.5 | 4.0 | 60 |
| 18 | 60 | 3.3 | 36.7 | - | - | - | 0.5 | 4.0 | 60 |
| 19 | 40 | 8.4 | 51.6 | - | - | - | 0.5 | 4.0 | 60 |
| 20 | 40 | 4.2 | 35.8 | 20.0 | - | - | 0.5 | 4.0 | 60 |
| 21 | 40 | 7.3 | 47.7 | 5.0 | - | - | 0.5 | 4.0 | 60 |
| 22 | 40 | 6.3 | 43.7 | 10.0 | - | - | 0.5 | 4.0 | 60 |
| 23 | 40 | 5.3 | 39.7 | 15.0 | - | - | 0.5 | 4.0 | 60 |

GMA = glycidyl methacrylate
BA = butyl acrylate
MMA = methyl methacrylate
HEMA = hydroxylethyl methacrylate
EA = ethyl acrylate
STY = styrene

Surfactant - The nonionic surfactant is Triton X-305 (70% active in water - 30 moles ethylene oxide nonyl phenol); and the anionic surfactant is Abex JKB (30% active in water - mixed alkyl sulfate).

The batch size was 800 grams total.

The physical constants of the polymers of Table 1 are set forth at Table 2.

TABLE 2

| Polymer No. | % Solids[1] | Initial pH | % Free Monomer | Epoxy Eq.Wt.[2] | Epoxy Eq.Wt. 100% Solids[3] | Theoretical Epoxy Eq.Wt. 100% Solids |
|---|---|---|---|---|---|---|
| 1 | 35.27 | 3.78 | 0.44 | 501 | 176 | - |
| 2 | 35.06 | 3.63 | 0.16 | 1476 | 517 | - |
| 3 | 34.98 | 3.86 | 0.05 | - | - | - |
| 4 | 35.41 | 4.02 | 0.05 | - | - | - |
| 5 | 35.40 | 4.05 | 0.14 | - | - | |
| 6 | 35.28 | 4.06 | 0.18 | - | - | - |
| 7 | 35.82 | 3.79 | 0.25 | 490 | 176 | - |
| 8 | 35.84 | 4.22 | 0.15 | 490 | 176 | - |
| 9 | 36.53 | 3.96 | 0.44 | - | - | - |
| 10 | 36.37 | 4.01 | 0.27 | - | - | - |
| 11 | 36.23 | 2.90 | 0.48 | 2640 | 956 | 761 |
| 12 | 36.44 | 2.93 | 0.32 | 1220 | 445 | 381 |
| 13 | 36.41 | 2.98 | 0.20 | 805 | 293 | 254 |
| 14 | 36.35 | 2.98 | 0.25 | 2590 | 941 | 761 |
| 15 | 36.76 | 2.98 | 0.22 | 1230 | 452 | 381 |
| 16 | 36.90 | 3.05 | 0.14 | 780 | 288 | 254 |
| 17 | 36.42 | 3.00 | 0.17 | 1180 | 430 | 381 |
| 18 | 36.60 | 3.07 | 0.34 | 780 | 285 | 254 |
| 19 | 36.50 | 3.29 | 0.23 | 1130 | 412 | 381 |
| 20 | 36.62 | 3.52 | 0.28 | 1220 | 447 | 381 |
| 21 | 36.23 | 3.30 | 0.22 | 1180 | 428 | 381 |
| 22 | 36.70 | 3.41 | 0.33 | 1150 | 422 | 381 |
| 23 | 36.78 | 3.52 | 0.34 | 1170 | 430 | 381 |

1 = in water as prepared.
2 = determined on actual samples as prepared.
3 = based on actual solids converted to 100%.

The molecular weights of the various polymers are set forth in Table 3 as follows:

TABLE 3

| Polymer No. | Molecular Weights M(N) | M(W) | M(V) | M(Z) | M(W)/M(N) | M(Z)/M(N) |
|---|---|---|---|---|---|---|
| 1 | 5,590 | 61,180 | 54,700 | 125,840 | 10.94 | 22.51 |
| 2 | 11,410 | 267,820 | 226,550 | 788,220 | 23.46 | 69.06 |
| 3 | 11,730 | 687,600 | 557,360 | 2,289,450 | 58.60 | 195.14 |
| 4 | 9,850 | 539,620 | 424,110 | 2,181,180 | 54.78 | 221.46 |
| 5 | 3,850 | 268,960 | 205,040 | 1,222,990 | 69.79 | 317.38 |
| 6 | 7,170 | 197,680 | 155,770 | 825,510 | 27.56 | 115.09 |
| 7 | 6,530 | 68,600 | 60,610 | 156,280 | 10.50 | 23.93 |
| 8 | 5,090 | 51,500 | 46,000 | 105,950 | 10.11 | 20.80 |
| 9 | 19,620 | 538,500 | 431,090 | 2,013,160 | 27.44 | 102.59 |
| 10 | 17,560 | 505,230 | 402,860 | 1,993,500 | 28.77 | 113.55 |
| 11 | 12,280 | 101,200 | 89,100 | 253,030 | 8.24 | 20.60 |
| 12 | 10,160 | 142,080 | 117,130 | 577,650 | 13.98 | 56.87 |
| 13 | 7,450 | 162,430 | 128,430 | 792,850 | 21.81 | 106.49 |
| 14 | 13,390 | 89,080 | 79,170 | 214,990 | 6.65 | 16.06 |
| 15 | 11,000 | 149,610 | 118,150 | 900,780 | 13.60 | 81.90 |
| 16 | 8,530 | 121,090 | 97,190 | 647,670 | 14.19 | 75.92 |
| 17 | 9,720 | 98,790 | 82,090 | 476,380 | 10.15 | 48.99 |
| 18 | 5,600 | 67,410 | 57,770 | 201,120 | 12.03 | 35.92 |
| 19 | 13,680 | 103,000 | 86,150 | 498,190 | 7.52 | 36.41 |
| 20 | 6,690 | 73,680 | 63,750 | 209,740 | 11.01 | 31.35 |
| 21 | 12,460 | 112,460 | 93,220 | 521,130 | 9.02 | 41.81 |
| 22 | 9,760 | 102,410 | 85,440 | 424,270 | 10.49 | 43.47 |
| 23 | 7,770 | 100,820 | 83,080 | 429,160 | 12.97 | 55.24 |

M(N) = number average molecular weight.
M(W) = weight average molecular weight.
M(V) = viscosity average molecular weight.

M(Z) = sedimentation average molecular weight; provides a specific measure of the number of molecules in the higher weight fractions of the molecular weight range.

$\frac{M(W)}{M(N)}$ = the polydispersity of the polymer which is an indication of the polymer viscosity.

$\frac{M(Z)}{M(N)}$ = this distribution index or ratio provides an indication of the presence or absence of higher molecular weight fractions.

In preparing the high molecular weight polymers for use according to the present invention, preferably combinations of anionic and nonionic surfactants are utilized. As seen from the ratio of monomers used in the examples, the percentage of monomer containing cationic reactive functionality can be varied over the range of from about 10% to about 80% of the total monomer used. Preferably, however, the polymer will contain from about 20 to 65% of the monomer containing the cationic reactive functionality. In the preparation of the polymer it has been found that the copper catalyst utilized is highly desirable, if not essential. Without the copper catalyst, polymer formation is slow or will not proceed.

Preparation Of Cationic Photo-Initiators

A solution containing 10% Triton X-405 (octylphenoxy polyethoxy ethanol) and 20% General Electric UVE-1016 (mixture of triphenyl and thiophenoxy diphenyl sulphonium hexafluorophosphate, 50% active in propylene carbonate) were heated to 80°C. This solution was slowly added to 70% deionized water which was vigorously stirred at 80°C. The dispersion was homogenized hot with a Chase-Logman homogenizer at 1500 psi. The emulsion was then force-cooled to 30°C. The emulsion is freshly prepared before each use.

In this preparation the UVE-1016 can be replaced with UVE-1014 which is a mixture of triphenyl and thiophenoxy diphenyl sulphonium hexafluoroantinmonate.

Formulation Of Polymer System

The polymer of polymer numbers 1-23 in the amount designated in Table 4 were mixed with a 3% solution of FSE fluoro-surfactant marketed by 3M in the amount designated in Table 4 so as to improve wetting and leveling. To this solution was added a solution of carbitol in deionized water, also as designated in Table 4. The mixture is then stirred for 20 minutes. The designated cationic photo-initiator (UVE) and the amount as set forth in Table 4 where A is UVE-1016 and B is UVE-1014 is next added to the stirred mixture to provide the polymer system. In the formulation of the polymer systems, the photo-initiator based on polymer solids will preferably comprise from about 0.75% to 10%, and more preferably from 3.75% to 5.0%. Where used, the KP-140 which is trisbutoxy ethyl phosphate plasticizer and 1,4-butanediol diglycidyl ether ("ether" in Table 4) which is a reactive coalescing agent were added along with the deionized water. Table 4 is as follows:

TABLE 4

| Example No. | Polymer/ Amount(g) | UVE Emulsion No./Amount(g) | Carbitol (Amount/g) | KP-140 (Amount/g) | FSE (Amount/g) | Ether (Amount/g) | Deionized Water/g |
|---|---|---|---|---|---|---|---|
| 1 | 01/70.00 | A/9.20 | 5.50 | 2.00 | 2.00 | - | 11.30 |
| 2 | 02/70.00 | A/9.20 | 5.50 | 2.00 | 2.00 | - | 11.30 |
| 3 | 03/70.00 | A/9.20 | 2.00 | - | 2.00 | - | 16.80 |
| 4 | 04/70.00 | A/9.20 | 2.00 | - | 2.00 | - | 16.80 |
| 5 | 05/70.00 | A/9.20 | 2.00 | - | 2.00 | - | 16.80 |
| 6 | 06/70.00 | A/9.20 | 2.00 | - | 2.00 | - | 16.80 |
| 7 | 09/50.00 | A/4.37 | 6.00 | - | 2.00 | - | 10.00 |
| 8 | 10/50.00 | A/4.37 | 6.00 | - | 2.00 | - | 10.00 |
| 9 | 07/70.00 | A/3.06 | 3.00 | - | 4.00 | - | 10.00 |
| 10 | 08/70.00 | A/3.06 | 3.00 | - | 4.00 | - | 10.00 |
| 11 | 11/35.00 | B/4.60 | - | - | 1.00 | 2.50 | 6.90 |
| 12 | 12/35.00 | B/4.60 | - | - | 1.00 | 2.50 | 6.90 |
| 13 | 13/35.00 | B/4.60 | - | - | 1.00 | 2.50 | 6.90 |
| 14 | 14/35.00 | B/4.60 | - | - | 1.00 | 2.50 | 6.90 |
| 15 | 15/35.00 | B/4.60 | - | - | 1.00 | 2.50 | 6.90 |
| 16 | 16/35.00 | B/4.60 | - | - | 1.00 | 2.50 | 6.90 |
| 17 | 11/35.00 | A/4.60 | - | - | 1.00 | 2.50 | 6.90 |
| 18 | 12/35.00 | A/4.60 | - | - | 1.00 | 2.50 | 6.90 |
| 19 | 13/35.00 | A/4.60 | - | - | 1.00 | 2.50 | 6.90 |
| 20 | 14/35.00 | A/4.60 | - | - | 1.00 | 2.50 | 6.90 |
| 21 | 15/35.00 | A/4.60 | - | - | 1.00 | 2.50 | 6.90 |
| 22 | 16/35.00 | A/4.60 | - | - | 1.00 | 2.50 | 6.90 |
| 23 | 11/35.00 | B/4.60 | 2.50 | 1.00 | 1.00 | - | 5.90 |
| 24 | 12/35.00 | B/4.60 | 2.50 | 1.00 | 1.00 | - | 5.90 |
| 25 | 13/35.00 | B/4.60 | 2.50 | 1.00 | 1.00 | - | 5.90 |
| 26 | 14/35.00 | B/4.60 | 2.50 | 1.00 | 1.00 | - | 5.90 |
| 27 | 15/35.00 | B/4.60 | 2.50 | 1.00 | 1.00 | - | 5.90 |
| 28 | 16/35.00 | B/4.60 | 2.50 | 1.00 | 1.00 | - | 5.90 |
| 29 | 11/35.00 | A/4.60 | 2.50 | 1.00 | 1.00 | - | 5.90 |
| 30 | 12/35.00 | A/4.60 | 2.50 | 1.00 | 1.00 | - | 5.90 |
| 31 | 13/35.00 | A/4.60 | 2.50 | 1.00 | 1.00 | - | 5.90 |
| 32 | 14/35.00 | A/4.60 | 2.50 | 1.00 | 1.00 | - | 5.90 |
| 33 | 15/35.00 | A/4.60 | 2.50 | 1.00 | 1.00 | - | 5.90 |
| 34 | 16/35.00 | A/4.60 | 2.50 | 1.00 | 1.00 | - | 5.90 |

Preparation Of Test Panel Polymer Systems

The polymer systems described in Examples 1-23 of Table 4 were cast onto test panels and spread with a doctor blade. The films were allowed to dry for one hour and recoated with up to three coats. The films were then allowed to dry overnight. The films were next irradiated with a medium pressure ultraviolet lamp, and allowed to cure for an additional twenty-four hours. The films were then tested for hardness and solvent resistance.

Evaluation of Films

All of the formulations described in Examples 1-23 formulated with the cationic photo-initiator when tested for hardness demonstrated a high degree of hardness and durability. Additionally, the films had good resistance when exposed to water and to an acetone or methylethylketone (MEK) rub. These characteristics indicate that the films will function satisfactorily in a floor coating or the like composition.

The varying hardness of the different formulations and different resistance to solvent such as acetone or methylethylketone of the formulations establish that a substantial variation in film characteristics can be obtained by modifying the monomer components of the polymers. As a general rule it is found that increasing the amount of the monomer with the cationic reactive functionality will provide an increased hardness and solvent resistance. On the other hand, it was found that the presence of styrene, while providing a film having good solvent resistance and acceptable hardness, decreases the hardness apparently as a result of the interference of styrene with crosslinking of the polymer and the generation of an acid by competing for the absorption of light. Further, it is found that anionic surfactants beyond a certain level can inhibit crosslinking. It was also found that the presence of a coalescing agent, i.e., the 1,4-butanediol diglycidyl ether, can provide for a more rapid rate of reaction and at times a more flexible film. Further, it was found that the presence of a reactive monomer such as a hydroxyl containing monomer, i.e., hydroxyl ethyl methacrylate, can increase the hardness of the film and solvent resistance apparently as a result of the hydroxyl functionality, increasing the crosslinking through the cationic reactive functionality. Thus, it has been found, as set forth hereinbefore, that the polymer system can contain from about 10% to 90% of the monomer containing ethylenic unsaturation and pendant cationic reactive functionality; and from about 90% to 10% of a monomer containing ethylenic functionality free of cationic reactive functionality, with up to about 35% of such 90% to 10% containing functionality in addition to the ethylenic unsaturation, such as hydroxyl functionality.

The coatings of the present invention are particularly useful in that initial surface cure is accomplished immediately upon exposure to ultraviolet light. However, the cure, unlike free radical cure, will continue after the source of ultraviolet light is removed; whereas with free radical cure, as soon as the ultraviolet light is removed, the curing stops. The application of ultraviolet light can also be accomplished in an open environment since oxygen does not affect the cure.

Specifically, before the exposure to ultraviolet light, the coatings, while being dry to the touch and capable of being walked on, would whiten and water-spot when exposed to water, and were methylethylketone and acetone solvent soluble. Immediately after exposure to the ultraviolet light, the coatings, while having increased resistance to water and MEK and acetone solvent, were still partially affected by water and dispersible with the MEK solvent. Twenty-four hours after exposure to ultraviolet light, the coating was fully resistant to water in that it did not whiten or water-spot, and further more was highly resistant to solvent including to a MEK and acetone rub.

While the present invention has been described primarily with respect to protective coatings for large surfaces such as floors, the polymer systems have various other applications including to clear overprint varnishes, roll coatings, paper coatings, can coatings, wood coatings, etc., as will be known to one skilled in the art.

As will be apparent to one skilled in the art, various modifications can be made within the scope of the aforesaid description. Such modifications being within the ability of one skilled in the art form a part of the present invention and are embraced by the appended claims.

## Claims

1. A stable, aqueous dispersion of a polymer characterized by an average molecular weight of at least 50,000 and comprising the reaction product of from 10 to 90% of a monomer containing ethylenic unsaturation and pendent cationic reactive functionality, and 90 to 10% of a monomer containing ethylenic functionality, said polymer having cationic functionality sufficient to undergo self-crosslinking through said cationic reactive functionality in the presence of a cationic photo-initiator and upon exposure to actinic light to become insoluble and infusible.

2. The polymer of claim 1 characterized in that when combined with a cationic photo-initiator forms a polymer system crosslinking upon exposure to actinic light to provide an infusible and insoluble material.

3. The polymer of claim 1 or 2 characterized in that said monomer containing cationic reactive functionality is a glycidyl acrylate, preferably glycidyl methacrylate.

4. The polymer of claim 1, 2 or 3, characterized in that the ethylenically unsaturated monomer is an acrylate ester, preferably selected from butylacrylate or a mixture of butylacrylate and methylacrylate.

5. The polymer of any of claims 1-4, characterized in that the acrylate ester includes hydroxy ethyl methacrylate.

6. The polymer of any of claims 1-5, characterized in that the monomer containing cationic reactive functionality is present at from 20 to 60%.

7. The polymer of any of claims 2-6, characterized in that the cationic photo-initiator is selected from a mixed triaryl sulfonium hexafluoro phosphate or a mixed triaryl sulfonium hexafluoro antimonate.

8. A floor coating composition characterized by comprising the polymer system of claim 2.

9. A method of applying a protective coating to a substrate characterized by the steps of (1) providing a polymer system comprising a high molecular weight polymer comprising (a) the reaction product of from 10 to 90% of a monomer containing ethylenic unsaturation and pendant cationic reactive functionality, and 90 to 10% of a monomer containing ethylenic functionality, and (b) a cationic photo-initiator, said polymer system crosslinking upon exposure to actinic light to provide an infusible and insoluble material; (2) applying the polymer system of (1) to a substrate; (3) permitting the substrate to dry; and thereafter (4) treating said substrate with ultraviolet light for a period of from 2 to 10 seconds.